(19) Europäisches Patentamt
European Patent Office
Office européen des brevets

(11) **EP 3 361 222 B1**

(12) **EUROPÄISCHE PATENTSCHRIFT**

(45) Veröffentlichungstag und Bekanntmachung des Hinweises auf die Patenterteilung:
**19.07.2023 Patentblatt 2023/29**

(21) Anmeldenummer: **18151204.7**

(22) Anmeldetag: **11.01.2018**

(51) Internationale Patentklassifikation (IPC):
**G01F 1/84** (2006.01)    **G01F 15/02** (2006.01)

(52) Gemeinsame Patentklassifikation (CPC):
**G01F 1/8436; G01F 15/022**

(54) **VERFAHREN ZUR DRUCKMESSUNG BEI EINEM CORIOLIS-MASSEDURCHFLUSSMESSGERÄT UND CORIOLIS-MASSEDURCHFLUSSMESSGERÄT**

METHOD FOR PRESSURE MEASUREMENT WITH A CORIOLIS  FLOW METER AND CORIOLIS FLOW METER

PROCÉDÉ DE MESURE DE PRESSION DANS UN DÉBITMÈTRE MASSIQUE À ACCÉLÉRATION DE CORIOLIS ET DÉBITMÈTRE MASSIQUE À ACCÉLÉRATION DE CORIOLIS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.02.2017   DE 102017102449**

(43) Veröffentlichungstag der Anmeldung:
**15.08.2018   Patentblatt 2018/33**

(73) Patentinhaber: **Krohne AG**
**4019 Basel (CH)**

(72) Erfinder: **Wang, Tao**
**Rough Common, Canterburry, CT2 9DG (GB)**

(74) Vertreter: **Gesthuysen Patentanwälte**
**Patentanwälte**
**Huyssenallee 100**
**45128 Essen (DE)**

(56) Entgegenhaltungen:
**EP-A1- 1 669 727        DE-A1- 10 256 376**
**US-A1- 2003 200 816**

**Beschreibung**

Die Erfindung betrifft ein Verfahren zur Druckmessung bei einem Coriolis-Massedurchflussmessgerät, wobei das Coriolis-Massedurchflussmessgerät wenigstens ein Messrohr, wenigstens einen Schwingungserzeuger, wenigstens zwei Schwingungsaufnehmer, wenigstens einen Temperatursensor, wenigstens einen Spannungssensor, wenigstens eine Anzeigeeinheit und wenigstens eine Steuer- und Auswerteeinheit aufweist, wobei das Messrohr von einem Medium durchströmt wird, wobei der Temperatursensor derart angeordnet ist, dass er die Temperatur des Messrohrs misst und als Temperaturmesswert T an die Ansteuer- und Auswerteeinheit weiterleitet, wobei der Spannungssensor derart ausgestaltet und angeordnet ist, dass der Spannungssensor die mechanische Spannung des Messrohrs in axialer Richtung und/oder der Umfangsrichtung misst und einen axialen Spannungsmesswert $S_a$ und/oder einen Spannungsmesswert $S_h$ in Umfangsrichtung an die Ansteuer- und Auswerteeinheit weiterleitet und wobei der Druck des Mediums basierend auf dem Temperaturmesswert T und wenigstens einem Spannungsmesswert $S_a$ und/oder $S_h$ bestimmt wird.

Zudem geht die Erfindung aus von einem Coriolis-Massedurchflussmessgerät, umfassend wenigstens ein Messrohr, wenigstens einen Schwingungserzeuger, wenigstens zwei Schwingungsaufnehmer, wenigstens einen Temperatursensor, wenigstens einen Spannungssensor, wenigstens eine Anzeigeeinheit und wenigstens eine Steuer- und Auswerteeinheit, wobei das Messrohr von einem Medium durchströmbar ist, wobei der Temperatursensor derart ausgestaltet und angeordnet ist, dass er die Temperatur des Messrohrs misst und als Temperaturmesswert T an die Ansteuer- und Auswerteeinheit weiterleitet, wobei der Spannungssensor derart ausgestaltet und angeordnet ist, dass der Spannungssensor die mechanische Spannung des Messrohrs in axialer Richtung und/oder in Umfangsrichtung misst und einen axialen Spannungsmesswert $S_a$ und/oder einen Spannungsmesswert $S_h$ der Umfangsrichtung an die Ansteuer- und Auswerteeinheit weiterleitet und die Ansteuer- und Auswerteeinheit derart ausgestaltet ist, dass sie den Druck des Mediums basierend auf dem Temperaturmesswert T und/oder wenigstens einem Spannungsmesswert $S_a$ und/oder $S_h$ bestimmt.

Aus dem Stand der Technik ist es bekannt, dass mit einem Coriolis-Massedurchflussmessgerät nicht nur der Massendurchfluss eines Mediums, das durch ein Messrohr strömt, sondern auch weitere Größen, wie beispielsweise die Dichte des Mediums oder auch der Druck des Mediums bestimmt werden kann. Für die Messung des Drucks innerhalb des Messrohrs wird dabei ausgenutzt, dass eine Druckänderung im Messrohr eine Umfangsänderung des Messrohrs zur Folge hat.

Die Druckschrift DE 102 56376 A1 offenbart ein Verfahren zur Druckmessung bei einem Coriolis-Massedurchflussmessgerät, wobei der Coriolis-Massedurchflussmessgerät einen Spannungssensor aufweist, der die mechanische Spannung des Messrohrs misst und wobei auf Grundlage der erfassten Spannung der Druck in dem Messrohr ermittelt wird. Als Spannungssensor ist insbesondere ein Dehnungsmessstreifen vorgesehen, der in Umfangsrichtung an dem Messrohr angebracht ist. Zudem ist ein weiterer Dehnungsmessstreifen, der in axialer Richtung an dem Messrohr angebracht ist, und ein Temperatursensor, der die Temperatur des Messrohrs misst, vorgesehen. Durch das zusätzliche Vorhandensein des Temperatursensors können auf Temperaturänderungen beruhende Messfehler korrigiert werden. Dabei wird der Druck entweder auf Grundlage eines theoretisch ermittelten Zusammenhangs zwischen dem Druck und der Umfangsänderung des Messrohrs bei einer konkret vorgegebenen Geometrie oder durch empirisch ermittelte Wertepaare von Druck Spannung oder einer empirischen Funktion bestimmt. Gemäß einer Ausgestaltung sind ein Dehnungsmessstreifen in Umfangsrichtung und ein Dehnungsmessstreifen in axialer Richtung am Messrohr angeordnet, wobei die Dehnungsmessstreifen als Widerstände in eine Wheatstonesche Brückenschaltung integriert sind.

Aus dem Dokument US 2003/0200816 A1 ist ebenfalls ein Coriolis-Massedurchflussmessgerät bekannt, wobei am Messrohr Dehnungsmessstreifen zur Messung der mechanischen Spannung angeordnet sind, die sowohl axial als auch in Umfangsrichtung orientiert sind. Die Dehnungsmessstreifen sind ebenfalls in eine Wheatstonesche Brückenschaltung integriert. Der im Messrohr herrschende Druck wird in Abhängigkeit der Spannungsmesswerte bestimmt.

Zudem ist aus der Druckschrift EP 1 669 727 A1 ein Verfahren zur Druckmessung mittels eines Coriolis-Massedurchflussmessgeräts bekannt, wobei der Druck im Messrohr über die Erfassung der Federkonstanten des Messrohrs bestimmt wird.

Die zuvor beschriebenen Verfahren zur Bestimmung des Drucks innerhalb des Messrohrs beruhen jedoch im Wesentlichen darauf, den Druck aufgrund eines empirisch ermittelten Zusammenhangs oder durch den unmittelbaren Vergleich der unterschiedlich orientierten Dehnungsmessstreifen, beispielsweise durch die Anordnung in einer Wheatstoneschen Brückenschaltung zu bestimmen.

Ausgehend von dem zuvor dargelegten Stand der Technik liegt der Erfindung die Aufgabe zugrunde, ein Verfahren zur Druckmessung bei einem Coriolis-Massedurchflussmessgerät anzugeben, mit dem der Druck innerhalb des Messrohrs besonders einfach bestimmt werden kann.

Gemäß einer ersten Lehre wird diese Aufgabe durch ein eingangs genanntes Verfahren dadurch gelöst, dass die Bestimmung des Druckwertes innerhalb des Messrohrs ausgehend von einem Druck $p_0$ durch einen Algorithmus erfolgt, wobei $p_0$ unter Referenzbedingungen aufgenommen wurde und dass weiterhin der Algorithmus den Unterschied zwischen dem Temperaturmesswert T und einem Referenzmesswert $T_0$ und zwischen wenigstens einem Spannungs-

messwert $S_a$ und/oder $S_h$ und Referenzmesswerten $S_{a0}$ und/oder $S_{h0}$ berücksichtigt, wobei die Referenzmesswerte $T_0$ und/oder $S_{a0}$ und/oder $S_{h0}$ unter Referenzbedingungen gemessen wurden und dass der mittels des Algorithmus bestimmte Druckwert über die Anzeigeeinheit ausgegeben wird.

Erfindungsgemäß wurde erkannt, dass die Bestimmung des Drucks innerhalb des Messrohrs besonders einfach dadurch erfolgen kann, dass ausgehend von einem bekannten Druck $p_0$ und bekannten Referenzmesswerten $T_0$, $S_{h0}$ und/oder $S_{a0}$ die Änderung der relevanten Messgrößen T, $S_h$ und/oder $S_a$ bestimmt wird. Fließen nur diese Änderungen in den Algorithmus zur Berechnung des Druckwertes ein, so ist der Algorithmus zur Bestimmung des Druckes besonders einfach und insbesondere besonders einfach zu implementieren. Das Verfahren weist somit insgesamt den Vorteil auf, dass die Bestimmung des Drucks im Gegensatz zu den aus dem Stand der Technik bekannten Verfahren besonders einfach erfolgt.

Gemäß einer vorteilhaften Ausgestaltung umfasst der Spannungssensor zur Erfassung der mechanischen Spannung des Messrohrs einen Dehnungsmessstreifen, der in Umfangsrichtung am Messrohr angeordnet ist und die mechanische Spannung in Umfangsrichtung erfasst, und einen Dehnungsmessstreifen, der in axialer Richtung am Messrohr angeordnet und die mechanische Spannung in axialer Richtung erfasst.

Zudem ist es vorteilhaft, wenn die Bestimmung des Drucks innerhalb des Messrohrs in Echtzeit erfolgt und in Echtzeit über die Anzeigeeinheit ausgegeben wird. Dabei meint die Angabe "in Echtzeit", dass die zeitliche Verzögerung der Ausgabe des Drucks des Mediums innerhalb des Messrohrs und der Erfassung der Temperatur- und der Spannungsmesswerte lediglich technisch bedingte Verzögerungen bei der Verarbeitung und Weiterleitung der Daten umfasst. Diese Ausgestaltung weist damit den Vorteil auf, dass der Nutzer stets über den in dem Messrohr herrschenden Druck informiert ist.

Gemäß einer weiteren Ausgestaltung wird der mittels des Algorithmus bestimmte Druck mit einem zuvor festgelegten Grenzwert verglichen und es wird eine Meldung ausgegeben, wenn der Druck einen oberen Grenzwert überschreitet oder einen unteren Grenzwert unterschreitet. Überschreitet der Druck einen oberen Grenzwert oder unterschreitet der Druck einen unteren Grenzwert, so können weitere Maßnahmen ergriffen werden, um die Ursache der Grenzwertüberschreitung oder der Grenzwertunterschreitung zu beseitigen.

Gemäß einer weiteren vorteilhaften Ausgestaltung wird im Wesentlichen gleichzeitig zur Druckbestimmung der Massedurchfluss des Mediums bestimmt und der gemessene Massedurchfluss wird mit dem gemessenen Druckwert korrigiert. Diese Ausgestaltung ist besonders vorteilhaft, da der Fehler der Massedurchflussbestimmung besonders klein ist.

Gemäß einer weiteren vorteilhaften Ausgestaltung beschreiben die Referenzbedingungen den Zustand des Messrohrs, in dem kein Medium durch das Messrohr fließt. Alternativ können die Referenzmesswerte auch am Anfang jeder Messung aufgenommen werden, sodass die Referenzbedingungen dann vorliegen, wenn ein Medium durch das Messrohr strömt und eine Messung begonnen wird.

Gemäß einer weiteren bevorzugten Ausgestaltung des Verfahrens fließt der Unterschied $\Delta T$ zwischen dem Temperaturmesswert T und dem Referenzmesswerte $T_0$ linear und/oder quadratisch in die Bestimmung des Drucks innerhalb des Mediums ein. Insbesondere die nichtlineare Berücksichtigung des Temperaturunterschiedes führt zu Druckwerten, die einen besonders kleinen Fehler aufweisen.

Weiterhin ist es bevorzugt, wenn der Unterschied $\Delta S_h$ zwischen dem Spannungsmesswert $S_h$ und dem Referenzmesswert $S_{h0}$ und/oder der Unterschied $\Delta S_a$ zwischen dem Spannungsmesswert $S_a$ und dem Referenzmesswert $S_{a0}$ linear in die Bestimmung des Drucks innerhalb des Mediums einfließen.

Gemäß einer weiteren bevorzugten Ausgestaltung wird der Druck gemäß der folgenden Formel bestimmt:

$$p = p_0 + c_1\,\Delta T + c_2\,\Delta S_h\,,$$

mit

$$\Delta T = T\text{-}T_0 \text{ und } \Delta S_h = S_h - S_{h0}$$

und wobei $c_1$ und $c_2$ Proportionalitätsfaktoren sind, die im Rahmen einer Regression bestimmbar sind. Die Bestimmung des Drucks gemäß dieser Ausgestaltung ist besonders einfach und mit besonders wenig Rechenaufwand verbunden. Dabei wird die axiale mechanische Spannung des Messrohrs jedoch nicht berücksichtigt.

In einer alternativen Ausgestaltung des Verfahrens wird der Druck gemäß der folgenden Formel bestimmt:

$$p = p_0 + c_1\,\Delta T + c_2\,\Delta S_h + c_3\,\Delta S_a,$$

mit

$$\Delta T = T\text{-}T_0 \text{ und } \Delta S_h = S_h - S_{h0} \text{ und } \Delta S_a = S_a - S_{a0},$$

und wobei $c_1$, $c_2$ und $c_3$ Proportionalitätsfaktoren sind, die im Rahmen einer Regression bestimmbar sind. Die Bestimmung des Drucks gemäß dieser Ausgestaltung ist besonders einfach und mit besonders wenig Rechenaufwand verbunden, wobei sowohl die mechanische Spannung in Umfangsrichtung als auch die axiale mechanische Spannung berücksichtigt werden.

In einer alternativen Ausgestaltung wird der Druck gemäß der folgenden Formel bestimmt:

$$p = p_0 + c_1\,\Delta T + c_2\Delta S_h + c_4\,\Delta T^2,$$

mit

$$\Delta T = T\text{-}T_0 \text{ und } \Delta S_h = S_h - S_{h0},$$

und wobei $c_1$, $c_2$ und $c_4$ Proportionalitätsfaktoren sind, die im Rahmen einer Regression bestimmbar sind. Auch die Bestimmung des Drucks gemäß dieser Ausgestaltung ist besonders einfach und mit besonders wenig Rechenaufwand verbunden. Die Bestimmung des Drucks ist dahin gehend optimiert, dass der Temperaturunterschied sowohl linear als auch quadratisch eingeht. Dies hat einen besonders kleinen Fehler der Bestimmung des Drucks zur Folge.

In einer alternativen Ausgestaltung wird der Druck gemäß der folgenden Formel bestimmt:

$$p = p_0 + c_1\,\Delta T + c_2\Delta S_h + c_3\,\Delta S_a + c_4\,\Delta T^2,$$

mit

$$\Delta T = T\text{-}T_0 \text{ und } \Delta S_h = S_h - S_{h0} \text{ und } \Delta S_a = S_a - S_{a0}\,,$$

und wobei $c_1$, $c_2$, $c_3$ und $c_4$ Proportionalitätsfaktoren sind, die im Rahmen einer Regression bestimmbar sind. Die Bestimmung des Drucks gemäß dieser Ausgestaltung ist besonders vorteilhaft, da der Temperaturunterschied sowohl linear als auch quadratisch in die Bestimmung des Drucks einfließen und darüber hinaus sowohl die mechanische Spannung in Umfangsrichtung als die axiale mechanische Spannung des Messrohrs berücksichtigt werden. Diese Berücksichtigung der Parameter gemäß dem zuvor dargelegten Zusammenhang hat einen besonders kleinen Fehler der Bestimmung des Drucks zur Folge.

Gemäß einer zweiten Lehre der vorliegenden Erfindung wird die eingangs genannte Aufgabe durch ein eingangs genanntes Coriolis-Massedurchflussmessgerät dadurch gelöst, dass die Ansteuer- und Auswerteeinheit derart ausgestaltet ist, dass die Ansteuer- und Auswerteeinheit derart ausgestaltet ist, dass die Bestimmung des Druckwertes innerhalb des Messrohrs ausgehend von dem Druck $p_0$ durch einen Algorithmus erfolgt, wobei $p_0$ unter Referenzbedingungen aufgenommen wurde und dass weiterhin der Algorithmus den Unterschied zwischen dem Temperaturmesswert $T$ und dem Referenzmesswert $T_0$ und zwischen wenigstens einem Spannungsmesswert $S_a$ und/oder $S_h$ und den Referenzmesswerten $S_{a0}$ und/oder $S_{h0}$ berücksichtigt, wobei die Referenzmesswerte $T_0$ und/oder $S_{a0}$ und/oder $S_{h0}$ unter Referenzbedingungen gemessen wurden und dass der mittels des Algorithmus bestimmten Druckwerts über die Anzeigeeinheit ausgegeben wird.

Gemäß einer besonders bevorzugten Ausgestaltung führt das Coriolis-Massedurchflussmessgerät im Betrieb eines der zuvor beschriebenen Verfahren durch.

Im Einzelnen gibt es nun eine Vielzahl von Möglichkeiten, das erfindungsgemäße Verfahren und das erfindungsgemäße Coriolis-Massedurchflussmessgerät auszugestalten und weiterzubilden. Dazu wird verwiesen sowohl auf die den unabhängigen Patentansprüchen nachgeordneten Patentansprüche als auch auf die nachfolgende Beschreibung von bevorzugten Ausführungsbeispielen in Verbindung mit der Zeichnung. In der Zeichnung zeigen

Fig. 1   ein erstes Ausführungsbeispiel eines Verfahrens zur Druckbestimmung bei einem Coriolis-Massedurchflussmessgerät,

Fig. 2    ein zweites Ausführungsbeispiels eines Verfahrens zur Druckbestimmung bei einem Coriolis-Massedurchflussmessgerät,

Fig. 3    ein drittes Ausführungsbeispiel eines Verfahrens zur Druckbestimmung bei einem Coriolis-Massedurchflussmessgerät,

Fig. 4    ein viertes Ausführungsbeispiel eines Verfahrens zur Druckbestimmung bei einem Coriolis-Massedurchflussmessgerät und

Fig. 5    ein erstes Ausführungsbeispiel eines erfindungsgemäßen Coriolis-Massedurchflussmessgeräts.

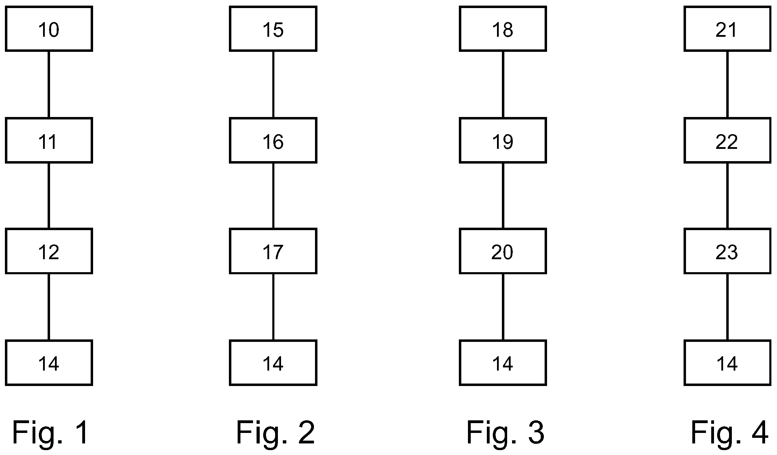

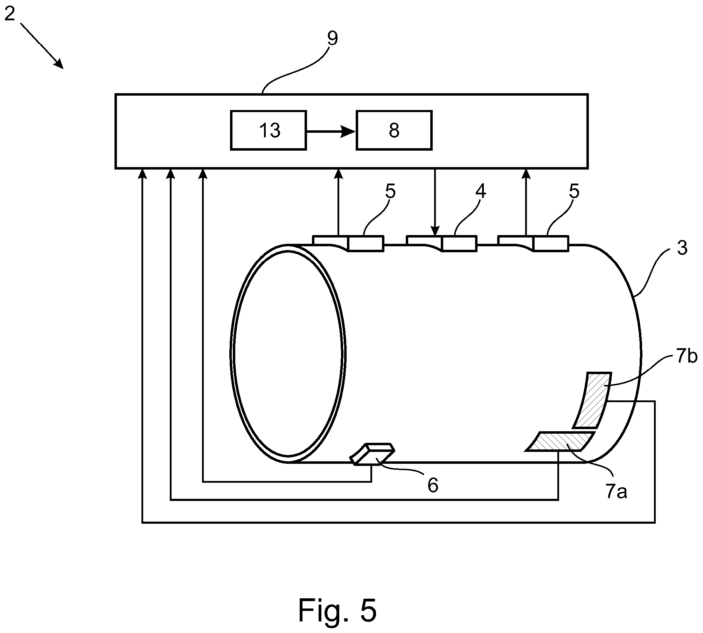

Fig. 1 zeigt ein erstes Ausführungsbeispiel eines Verfahrens 1 zur Druckbestimmung bei einem Coriolis-Massedurchflussmessgerät 2, wobei das Coriolis-Massedurchflussmessgerät 2, wie beispielsweise in Fig. 5 dargestellt, die folgenden Komponenten aufweist: ein Messrohr 3, einen Schwingungserzeuger 4, zwei Schwingungsaufnehmer 5, einen Temperatursensor 6, wenigstens einen Spannungssensor 7, wenigstens eine Anzeigeeinheit 8 und wenigstens eine Steuer- und Auswerteeinheit 9, wobei das Messrohr 3 im Betrieb von einem Medium durchströmt wird, wobei der Temperatursensor 6 derart angeordnet ist, dass er die Temperatur des Messrohrs 3 misst und als Temperaturmesswert T an die Ansteuer- und Auswerteeinheit 9 weiterleitet, wobei der Spannungssensor 7 derart ausgestaltet und angeordnet ist, dass der Spannungssensor 7 die mechanische Spannung des Messrohrs 3 in Umfangsrichtung misst und einen Spannungsmesswert $S_h$ der Umfangrichtung an die Ansteuer- und Auswerteeinheit 9 weiterleitet.
In dem in Fig. 5 dargestellten Ausführungsbeispiel umfasst der Spannungssensor 7 einen Dehnungsmessstreifen 7a, der in axialer Richtung des Messrohrs 3 angeordnet ist und einen Dehnungsmessstreifen 7b, der in Umfangsrichtung des Messrohrs 3 angeordnet ist. Für das in Fig. 1 dargestellte Verfahren wird jedoch nur der Dehnungsmessstreifen 7b, der in Umfangsrichtung des Messrohrs 3 angeordnet ist, benötigt.
Die Dehnungsmessstreifen 7a, 7b können auch an anderen Positionen des Messrohrs 3 angebracht sein, beispielsweise an einer deutlich mittigeren Position in Bezug auf die Enden des Messrohrs 3. Das Gleiche gilt für die Position des Temperatursensors 6.
In einem ersten Schritt 10 des in Fig. 1 dargestellten Verfahrens 1 werden unter Referenzbedingungen der Druck $p_0$, die Temperatur $T_0$ des Messrohrs 3 und die mechanische Spannung $S_{h0}$ in Umfangrichtung gemessen. Anschließend wird das Messrohr 3 von dem zu vermessenden Medium durchflossen.
In einem nächsten Schritt 11 wird die Temperatur T des Messrohrs 3 und die mechanische Spannung $S_h$ bestimmt.
In einem anschließenden Schritt 12 wird der Druck 13 gemäß dem folgenden Zusammenhang bestimmt: $p = p_0 + c_1 \Delta T + c_2 \Delta S_h$.
Schließlich wird der Druck 13 an die Anzeigeeinheit 8 übermittelt und ausgegeben 14.
In Fig. 2 ist dargestellt ein zweites Ausführungsbeispiel eines Verfahrens 1 zur Druckbestimmung bei einem Coriolis-Massedurchflussmessgerät 2, wobei das Coriolis-Massedurchflussmessgerät 2, wie es beispielsweise in Fig. 3 dargestellt und zuvor beschrieben wurde. Im Unterschied zu dem in Fig. 1 beschriebenen Verfahren wird in dem in Fig. 2 beschriebenen Verfahren sowohl der Spannungswert $S_a$ in axialer Richtung als auch der Spannungswert $S_h$ der Umfangsrichtung des Messrohrs 3 benötigt.
In einem ersten Schritt 15 des in Fig. 2 dargestellten Verfahrens 1 wird unter Referenzbedingungen der Druck $p_0$, die Temperatur $T_0$ des Messrohrs 3, die mechanische Spannung $S_{a0}$ in axialer Richtung und die mechanische Spannung $S_{h0}$ in Umfangsrichtung gemessen. Anschließend wird das Messrohr 3 von dem zu vermessenden Medium durchflossen.
In einem nächsten Schritt 16 wird die Temperatur T des Messrohrs 3, die mechanische Spannung $S_h$ und die mechanischen Spannung $S_a$ bestimmt.
In einem anschließenden Schritt 17 wird der Druck 13 gemäß dem folgenden Zusammenhang bestimmt: $p = p_0 + c_1 \Delta T + c_2 \Delta S_h + c_3 \Delta S_a$.
Schließlich wird der Druck 13 an die Anzeigeeinheit 8 übermittelt und ausgegeben 14.
In Fig. 3 ist dargestellt ein drittes Ausführungsbeispiel eines Verfahrens 1 zur Druckbestimmung bei einem Coriolis-Massedurchflussmessgerät 2, wobei das Coriolis-Massedurchflussmessgerät 2, wie es beispielsweise in Fig. 3 dargestellt und zuvor beschrieben wurde. Wie in den in Fig. 1 dargestellten Verfahren wird nur der Wert der mechanischen Spannung $S_h$ in Umfangsrichtung benötigt.
In einem ersten Schritt 18 des in Fig. 2 dargestellten Verfahrens 1 wird unter Referenzbedingungen der Druck $p_0$, die Temperatur $T_0$ des Messrohrs 3, und die mechanischen Spannung $S_{h0}$ in Umfangsrichtung gemessen. Anschließend wird das Messrohr 3 von dem zu vermessenden Medium durchflossen.
In einem nächsten Schritt 19 wird die Temperatur T des Messrohrs 3 und die mechanische Spannung $S_h$ bestimmt.

In einem anschließenden Schritt 20 wird der Druck 13 gemäß dem folgenden Zusammenhang bestimmt: $p = p_0 + c_1 \Delta T + c_2 \Delta S_h + c_4 \Delta T^2$.

Schließlich wird der Druck 13 an die Anzeigeeinheit 8 übermittelt und ausgegeben 14.

In Fig. 4 ist dargestellt ein viertes Ausführungsbeispiel eines Verfahrens 1 zur Druckbestimmung bei einem Coriolis-Massedurchflussmessgerät 2, wobei das Coriolis-Massedurchflussmessgerät 2, wie es beispielsweise in Fig. 3 dargestellt und zuvor beschrieben wurde.

In einem ersten Schritt 21 des in Fig. 4 dargestellten Verfahrens 1 wird unter Referenzbedingungen der Druck $p_0$, die Temperatur $T_0$ des Messrohrs 3, die mechanische Spannung in axialer Richtung $S_{a0}$ und die mechanischen Spannung $S_{h0}$ in Umfangsrichtung gemessen. Anschließend wird das Messrohr 3 von dem zu vermessenden Medium durchflossen.

In einem nächsten Schritt 22 wird die Temperatur T des Messrohrs 3, die mechanische Spannung $S_a$ und die mechanische Spannung $S_h$ bestimmt.

In einem anschließenden Schritt 23 wird der Druck 13 gemäß dem folgenden Zusammenhang bestimmt: $p = p_0 + c_1 \Delta T + c_2 \Delta S_h + c_3 \Delta S_a + c_4 \Delta T^2$.

Schließlich wird der Druck 13 an die Anzeigeeinheit 8 übermittelt und ausgegeben 14.

## Bezugszeichen

| | |
|---|---|
| 1 | Verfahrens zur Druckbestimmung bei einem Coriolis-Massedurchflussmessgerät |
| 2 | Coriolis-Massedurchflussmessgerät |
| 3 | Messrohr |
| 4 | Schwingungserzeuger |
| 5 | Schwingungsaufnehmer |
| 6 | Temperatursensor |
| 7 | Spannungssensor |
| 7a | Dehnungsmessstreifen |
| 7b | Dehnungsmessstreifen |
| 8 | Anzeigeeinheit |
| 9 | Ansteuer- und Auswerteeinheit |
| 10 | Bestimmung $p_0$, $T_0$ und $S_{h0}$ |
| 11 | Bestimmung T und $S_h$ |
| 12 | Bestimmung des Drucks: $p = p_0 + c_1 \Delta T + c_2 \Delta S_h$ |
| 13 | Druck |
| 14 | Übermittlung an die Anzeigeeinheit und Ausgabe des Druckwerts |
| 15 | Bestimmung $p_0$, $T_0$, $S_{a0}$ und $S_{h0}$ |
| 16 | Bestimmung T, $S_a$, $S_h$ |
| 17 | Bestimmung des Drucks: $p = p_0 + c_1 \Delta T + c_2 \Delta S_h + c_3 \Delta S_a$ |
| 18 | Bestimmung $p_0$, $T_0$ und $S_{h0}$ |
| 19 | Bestimmung T und $S_h$ |
| 20 | Bestimmung des Drucks: $p = p_0 + c_1 \Delta T + c_2 \Delta S_h + c_4 \Delta T^2$ |
| 21 | Bestimmung $p_0$, $T_0$, $S_{a0}$ und $S_{h0}$ |
| 22 | Bestimmung T, $S_a$ und $S_h$ |
| 23 | Bestimmung des Drucks: $p = p_0 + c_1 \Delta T + c_2 \Delta S_h + c_3 \Delta S_a + c_4 \Delta T^2$ |

## Patentansprüche

1. Verfahren (1) zur Druckmessung bei einem Coriolis-Massedurchflussmessgerät (2), wobei das Coriolis-Massedurchflussmessgerät (2) wenigstens ein Messrohr (3), wenigstens einen Schwingungserzeuger (4), wenigstens zwei Schwingungsaufnehmer (5), wenigstens einen Temperatursensor (6), wenigstens einen Spannungssensor (7), wenigstens eine Anzeigeeinheit (8) und wenigstens eine Steuer- und Auswerteeinheit (9) aufweist, wobei das Messrohr (3) von einem Medium durchströmt wird, wobei der Temperatursensor (6) derart angeordnet ist, dass er die Temperatur des Messrohrs (3) misst und als Temperaturmesswert T an die Ansteuer- und Auswerteeinheit (9) weiterleitet, wobei der Spannungssensor (7) derart ausgestaltet und angeordnet ist, dass der Spannungssensor die mechanische Spannung des Messrohrs (3) in axialer Richtung und/oder in Umfangsrichtung misst und einen axialen Spannungsmesswert $S_a$ und/oder einen Spannungsmesswert $S_h$ der Umfangsrichtung an die Ansteuer- und Auswerteeinheit (9) weiterleitet und wobei der Druck (13) des Mediums basierend auf dem Temperaturmesswert T und wenigstens einem Spannungsmesswert $S_a$ und/oder $S_h$ bestimmt wird, **dadurch gekennzeichnet,**

**dass** die Bestimmung des Druckwertes (13) innerhalb des Messrohrs (3) ausgehend von einem Druck $p_0$ durch einen Algorithmus erfolgt, wobei $p_0$ unter Referenzbedingungen aufgenommen wurde und dass weiterhin der Algorithmus den Unterschied zwischen dem Temperaturmesswert T und einem Referenzmesswert $T_0$ und zwischen wenigstens dem Spannungsmesswert $S_h$ und einem Referenzwert $S_{h0}$ und/oder dem Spannungsmesswert $S_a$ und einem Referenzmesswert $S_{a0}$ berücksichtigt, wobei die Referenzmesswerte $T_0$, $S_{a0}$, $S_{h0}$ unter Referenzbedingungen gemessen wurden, dass der mittels des Algorithmus bestimmte Druckwert (3) über die Anzeigeeinheit (8) ausgegeben wird und
**dass** der Algorithmus eine der folgenden Formeln umfasst:

$$p = p_0 + c_1\,\Delta T + c_2\,\Delta S_h$$

oder

$$p = p_0 + c_1\,\Delta T + c_2\,\Delta S_h + c_3\,\Delta S_a$$

oder

$$p = p_0 + c_1\,\Delta T + c_2\Delta S_h + c_4\,\Delta T^2$$

oder

$$p = p_0 + c_1\,\Delta T + c_2\Delta S_h + c_3\,\Delta S_a + c_4\,\Delta T^2,$$

mit

$$\Delta T = T - T_0 \text{ und } \Delta S_h = S_h - S_{h0} \text{ und } \Delta S_a = S_a - S_{a0},$$

und wobei $c_1$, $c_2$, $c_3$ und $c_4$ Proportionalitätsfaktoren sind, die im Rahmen einer Regression bestimmbar sind.

2. Verfahren (1) nach Anspruch 1, **dadurch gekennzeichnet, dass** die Referenzbedingungen den Zustand des Messrohrs (3) beschreiben, in dem kein Medium durch das Messrohr (3) fließt.

3. Verfahren (1) nach einem der Ansprüche 1 oder 2, **dadurch gekennzeichnet, dass** der Unterschied $\Delta T$ zwischen dem Temperaturmesswert T und dem Referenzmesswerte $T_0$ linear und/oder quadratisch in den Algorithmus zur Bestimmung des Drucks (13) des Mediums einfließt.

4. Verfahren (1) nach einem der Ansprüche 1 bis 3, **dadurch gekennzeichnet, dass** der Unterschied $\Delta S_h$ zwischen dem Spannungsmesswert $S_h$ und dem Referenzmesswert $S_{h0}$ und/oder der Unterschied $\Delta S_a$ zwischen dem Spannungsmesswert $S_a$ und dem Referenzmesswert $S_{a0}$ linear in den Algorithmus zur Bestimmung des Drucks (13) des Mediums einfließen.

5. Coriolis-Massedurchflussmessgerät (2), umfassend wenigstens ein Messrohr (3), wenigstens einen Schwingungserzeuger (4), wenigstens zwei Schwingungsaufnehmer (5), wenigstens einen Temperatursensor (6), wenigstens einen Spannungssensor (7), wenigstens eine Anzeigeeinheit (8) und wenigstens eine Steuer- und Auswerteeinheit (9), wobei das Messrohr (3) von einem Medium durchströmbar ist, wobei der Temperatursensor (6) derart ausgestaltet und angeordnet ist, dass er die Temperatur des Messrohrs (3) misst und als Temperaturmesswert T an die Ansteuer- und Auswerteeinheit (9) weiterleitet, wobei der Spannungssensor (7) derart ausgestaltet und angeordnet ist, dass der Spannungssensor (7) die mechanische Spannung des Messrohrs (3) in axialer Richtung und/oder in Umfangsrichtung misst und einen axialen Spannungsmesswert $S_a$ und/oder einen Spannungsmesswert $S_h$ der Umfangsrichtung an die Ansteuer- und Auswerteeinheit (9) weiterleitet und die Ansteuer- und Auswerteeinheit (9) derart ausgestaltet ist, dass sie den Druck (13) des Mediums basierend auf dem Temperaturmesswert T und/oder wenigstens einem Spannungsmesswert $S_a$ und/oder $S_h$ bestimmt, **dadurch gekennzeichnet,**

**dass** die Ansteuer- und Auswerteeinheit (9) derart ausgestaltet ist, dass die Bestimmung des Druckwertes (13) innerhalb des Messrohrs ausgehend von dem Druck $p_0$ durch einen Algorithmus erfolgt, wobei $p_0$ unter Referenzbedingungen aufgenommen wurde und dass weiterhin der Algorithmus den Unterschied zwischen dem Temperaturmesswert T und dem Referenzmesswert $T_0$ und zwischen wenigstens dem Spannungsmesswert $S_h$ und einem Referenzwert $S_{h0}$ und/oder dem Spannungsmesswert $S_a$ und einem Referenzmesswert $S_{a0}$ berücksichtigt, wobei die Referenzmesswerte $T_0$, $S_{a0}$, $S_{h0}$ unter Referenzbedingungen gemessen wurden, dass der mittels des Algorithmus bestimmten Druckwerts über die Anzeigeeinheit (8) ausgegeben wird und **dass** der Algorithmus eine der folgenden Formeln umfasst:

$$p = p_0 + c_1\,\Delta T + c_2\,\Delta S_h$$

oder

$$p = p_0 + c_1\,\Delta T + c_2\,\Delta S_h + c_3\,\Delta S_a$$

oder

$$p = p_0 + c_1\,\Delta T + c_2\Delta S_h + c_4\,\Delta T^2$$

oder

$$p = p_0 + c_1\,\Delta T + c_2\Delta S_h + c_3\,\Delta S_a + c_4\,\Delta T^2,$$

mit

$$\Delta T = T - T_0 \text{ und } \Delta S_h = S_h - S_{h0} \text{ und } \Delta S_a = S_a - S_{a0},$$

und wobei $c_1$, $c_2$, $c_3$ und $c_4$ Proportionalitätsfaktoren sind, die im Rahmen einer Regression bestimmbar sind.

6. Coriolis-Massedurchflussmessgerät (2) nach Anspruch 5, **dadurch gekennzeichnet, dass** das Coriolis-Massedurchflussmessgerät im Betrieb ein Verfahren gemäß einem der Ansprüche 1 bis 4 durchführt.

**Claims**

1. Method (1) for pressure measurement using a Coriolis mass flowmeter (2), wherein the Coriolis mass flowmeter (2) has at least one measuring tube (3), at least one oscillation generator (4), at least two oscillation sensors (5), at least one temperature sensor (6), at least one tension sensor (7), at least one display unit (8) and at least one control and evaluation unit (9), wherein the measuring tube (3) has medium flowing through it, wherein the temperature sensor (6) is arranged such that it measures the temperature of the measuring tube (3) and forwards it as a measured temperature value T to the control and evaluation unit (9), wherein the tension sensor (7) is designed and arranged such that the tension sensor measures the mechanical tension of the measuring tube (3) in the axial direction and/or in the circumferential direction and forwards a measured axial tension value $S_a$ and/or a measured tension value $S_h$ of the circumferential direction to the control and evaluation unit (9) and wherein the pressure (13) of the medium is determined based on the measured temperature value T and at least one measured tension value $S_a$ and/or $S_h$ **characterized in,**

**that** the determination of the pressure value (13) within the measuring tube (3) is carried out based on a pressure $p_0$ using an algorithm, wherein $p_0$ was recorded under reference conditions and that, further, the algorithm takes into account the difference between the measured temperature value T and a reference measured value $T_0$

and between at least the voltage measured value $S_h$ and a reference value $S_{h0}$ and/or the voltage measured value $S_a$ and a reference measured value $S_{a0}$, wherein the reference measured values $T_0$, $S_{a0}$, $S_{h0}$ were measured under reference conditions and that the pressure value (13) determined by means of the algorithm is issued via the display unit (8) and

**that** the algorithm comprises one of the following formulas:

$$p = p_0 + c_1\, \Delta T + c_2\, \Delta S_h$$

or

$$p = p_0 + c_1\, \Delta T + c_2\, \Delta S_h + c_3\, \Delta S_a$$

or

$$p = p_0 + c_1\, \Delta T + c_2 \Delta S_h + c_4\, \Delta T^2$$

or

$$p = p_0 + c_1\, \Delta T + c_2 \Delta S_h + c_3\, \Delta S_a + c_4\, \Delta T^2,$$

where

$$\Delta T = T - T_0 \text{ and } \Delta S_h = S_h - S_{h0} \text{ and } \Delta S_a = S_a - S_{a0},$$

and wherein $c_1$, $c_2$, $c_3$, and $c_4$ are proportionality factors determinable in regression.

2. Method (1) according to claim 1, **characterized in that** the reference conditions describe the state of the measuring tube (3) in which no medium is flowing through the measuring tube (3).

3. Method (1) according to any one of claims 1 or 2, **characterized in that** the difference $\Delta T$ between the measured temperature value $T$ and the reference measured value $T_0$ is linearly and/or quadratically implemented into the algorithm for determining the pressure (13) of the medium.

4. Method (1) according to any one of claims 1 to 3, **characterized in that** the difference $\Delta S_h$ between the measured tension value $S_h$ and the reference measured value $S_{h0}$ and/or the difference $\Delta S_a$ between the measured tension value $S_a$ and the reference measured value $S_{a0}$ is linearly and/or quadratically implemented into the algorithm for determining the pressure (13) of the medium.

5. Coriolis mass flowmeter (2) comprised of at least one measuring tube (3), at least one oscillation generator (4), at least two oscillation sensors (5), at least one temperature sensor (6), at least one tension sensor (7), at least one display unit (8) and at least one control and evaluation unit (9), wherein the measuring tube (3) can have medium flowing through it, wherein the temperature sensor (6) is designed and arranged such that it measures the temperature of the measuring tube (3) and forwards it as a measured temperature value $T$ to the control and evaluation unit (9), wherein the tension sensor (7) is designed and arranged such that the tension sensor measures the mechanical tension of the measuring tube (3) in the axial direction and/or in the circumferential direction and forwards a measured axial tension value $S_a$ and/or a measured tension value $S_h$ of the circumferential direction to the control and evaluation unit (9) and the control and evaluation unit (9) is designed such that it determines the pressure (13) of the medium based on the measured temperature value $T$ and/or at least one measured tension value $S_a$ and/or $S_h$, **characterized in**

**that** the control and evaluation unit (9) is designed so that the determination of the pressure value (13) is carried out within the measuring tube based on the pressure $p_0$ using an algorithm, wherein $p_0$ was recorded under reference conditions and that, furthermore, the algorithm takes into account the difference between the measured temperature value T and the reference measured value $T_0$ and between at least the voltage measured value $S_h$ and a reference value $S_{h0}$ and/or the voltage measured value Sa and a reference measured value $S_{a0}$, wherein the reference measured values $T_0$, $S_{a0}$, $S_{h0}$ were measured under reference conditions and that the pressure value determined using the algorithm is issued via the display device (8)

**that** the algorithm comprises one of the following formulas:

$$p = p_0 + c_1 \, \Delta T + c_2 \, \Delta S_h$$

or

$$p = p_0 + c_1 \, \Delta T + c_2 \, \Delta S_h + c_3 \, \Delta S_a$$

or

$$p = p_0 + c_1 \, \Delta T + c_2 \Delta S_h + c_4 \, \Delta T^2$$

or

$$p = p_0 + c_1 \, \Delta T + c_2 \Delta S_h + c_3 \, \Delta S_a + c_4 \, \Delta T^2,$$

where

$$\Delta T = T - T_0 \text{ and } \Delta S_h = S_h - S_{h0} \text{ and } \Delta S_a = S_a - S_{a0},$$

and wherein $c_1$, $c_2$, $c_3$, and $c_4$ are proportionality factors determinable in regression.

6. Coriolis mass flowmeter (2) according to claim 5, **characterized in that** the Coriolis mass flowmeter carries out a method according to any one of clams 1 to 4 during operation.

## Revendications

1. Procédé (1) de mesure de pression dans un débitmètre massique à effet Coriolis (2), le débitmètre massique à effet Coriolis (2) comportant au moins un tube de mesure (3), au moins un générateur de vibrations (4), au moins deux capteurs de vibrations (5), au moins un capteur de température (6), au moins un capteur de contrainte (7), au moins une unité d'affichage (8) et au moins une unité de commande et d'évaluation (9), un fluide s'écoulant à travers le tube de mesure (3), le capteur de température (6) étant disposé de manière à mesurer la température du tube de mesure (3) et à la transmettre à l'unité de commande et d'évaluation (9) comme valeur de mesure de température T, le capteur de contrainte (7) étant conçu et disposé de manière à ce que le capteur de contrainte mesure la contrainte mécanique du tube de mesure (3) dans la direction axiale et/ou dans la direction circonférentielle et transmette une valeur de mesure de contrainte axiale $S_a$ et/ou une valeur de mesure de contrainte $S_h$ dans la direction circonférentielle à l'unité de commande et d'évaluation (9) et la pression (13) du milieu étant déterminée sur la base de la valeur de mesure de température T et d'au moins une valeur de mesure de contrainte $S_a$ et/ou $S_h$, **caractérisé en ce que**

la détermination de a valeur de pression (13) à l'intérieur du tube de mesure (3) est effectuée par un algorithme basé à partir d'une pression $p_0$, $p_0$ ayant été enregistrée dans des conditions de référence et **en ce que** l'algorithme prend également en compte la différence entre la valeur de mesure de température T et une valeur de mesure de référence $T_0$ et entre au moins la valeur de mesure de contrainte $S_h$ et une valeur de référence $S_{h0}$ et/ou la valeur de mesure de contrainte $S_a$ et une valeur de mesure de référence $S_{a0}$, les valeurs de mesure de référence $T_0$, $S_{a0}$, $S_{h0}$ ayant été mesurés dans des conditions de référence, **en ce que** la valeur de pression (3) déterminée au moyen de l'algorithme est délivrée en sortie par le biais de l'unité d'affichage (8), et **en ce que** l'algorithme comprend l'une des formules suivantes :

$$p = p_0 + c_1 \Delta T + c_2 \Delta S_h$$

ou

$$p = p_0 + c_1 \Delta T + c_2 \Delta S_h + c_3 \Delta S_a$$

ou

$$p = p_0 + c_1 \Delta T + c_2 \Delta S_h + c_4 \Delta T^2$$

ou

$$p = p_0 + c_1 \Delta T + c_2 \Delta S_h + c_3 \Delta S_a + c_4 \Delta T^2,$$

avec

$$\Delta T = T - T_0 \text{ et } \Delta S_h = S_h - S_{h0} \text{ et } \Delta S_a = S_a - S_{a0},$$

et $c_1$, $c_2$, $c_3$ et $c_4$ étant des facteurs de proportionnalité qui peuvent être déterminés dans le cadre d'une régression.

2. Procédé (1) selon la revendication 1, **caractérisé en ce que** les conditions de référence décrivent l'état du tube de mesure (3) dans lequel aucun milieu ne s'écoule à travers le tube de mesure (3).

3. Procédé (1) selon la revendication 1 ou 2, **caractérisé en ce que** la différence $\Delta T$ entre la valeur de mesure de température T et la valeur de mesure de référence $T_0$ est incluse de manière linéaire et/ou quadratique dans l'algorithme de détermination de la pression (13) du milieu.

4. Procédé (1) selon l'une des revendications 1 à 3, **caractérisé en ce que** la différence $\Delta S_h$ entre la valeur de mesure de contrainte $S_h$ et la valeur de mesure de référence $S_{h0}$ et/ou la différence $\Delta S_a$ entre la valeur de mesure de contrainte $S_a$ et la valeur de mesure de référence $S_{a0}$ sont inclus de manière linéaire dans l'algorithme de détermination de la pression (13) du milieu.

5. Débitmètre massique à effet Coriolis (2), comprenant au moins un tube de mesure (3), au moins un générateur de vibrations (4), au moins deux capteurs de vibrations (5), au moins un capteur de température (6), au moins un capteur de contrainte (7), au moins une unité d'affichage (8) et au moins une unité de commande et d'évaluation (9), un fluide pouvant s'écouler à travers le tube de mesure (3), le capteur de température (6) étant conçu et disposé de manière à mesurer la température du tube de mesure (3) et à la transmettre à l'unité de commande et d'évaluation (9) comme valeur de mesure de température T, le capteur de contrainte (7) étant conçu et disposé de manière à ce que le capteur de contrainte (7) mesure la contrainte mécanique du tube de mesure (3) dans la direction axiale et/ou dans la direction circonférentielle et transmette une valeur de mesure de contrainte axiale $S_a$ et/ou une valeur de mesure de contrainte $S_h$ dans la direction circonférentielle à l'unité de commande et d'évaluation (9) et l'unité de commande et d'évaluation (9) étant conçue de manière à déterminer la pression (13) du milieu sur la base de la valeur de mesure de température T et/ou 'au moins une valeur de mesure de contrainte $S_a$ et/ou $S_h$,
**caractérisé en ce que**
l'unité de commande et d'évaluation (9) est conçue de manière à ce que la valeur de pression (13) à l'intérieur du tube de mesure soit déterminée par un algorithme à partir de la pression $p_0$, $p_0$ ayant été enregistré dans des conditions de référence et **en ce que** l'algorithme prend également en compte la différence entre la valeur de mesure de température T et la valeur de mesure de référence $T_0$ et entre au moins la valeur de mesure de contrainte $S_h$ et une valeur de référence $S_{h0}$ et/ou la valeur de mesure de contrainte $S_a$ et une valeur de mesure de référence $S_{a0}$, les valeurs de mesure de référence $T_0$, $S_{a0}$, $S_{h0}$ ayant été mesurées dans des conditions de référence, **en ce que** la valeur de pression déterminée au moyen de l'algorithme est délivrée en sortie par le biais de l'unité d'affichage (8) et **en ce que** l'algorithme comprend l'une des formules suivantes :

$$p = p_0 + c_1 \Delta T + c_2 \Delta S_h$$

ou

$$p = p_0 + c_1 \Delta T + c_2 \Delta S_h + c_3 \Delta S_a$$

ou

$$p = p_0 + c_1 \Delta T + c_2 \Delta S_h + c_4 \Delta T^2$$

ou

$$p = p_0 + c_1 \Delta T + c_2 \Delta S_h + c_3 \Delta S_a + c_4 \Delta T^2,$$

avec

$$\Delta T = T - T_0 \text{ et } \Delta S_h = S_h - S_{h0} \text{ et } \Delta S_a = S_a - S_{a0},$$

et $c_1$, $c_2$, $c_3$ et $c_4$ étant des facteurs de proportionnalité qui peuvent être déterminés dans le cadre d'une régression.

6. Débitmètre massique à effet Coriolis (2) selon la revendication 5, **caractérisé en ce que** le débitmètre massique à effet Coriolis met en œuvre en fonctionnement un procédé selon l'une des revendications 1 à 4.

Fig. 4

Fig. 3

Fig. 2

Fig. 1

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10256376 A1
- US 20030200816 A1

- EP 1669727 A1